# EUROPEAN PATENT APPLICATION

(11) **EP 3 197 016 A1**
(43) Date of publication of application: **26.07.2017**
(21) Application number: 15841592.7
(22) Date of filing: 18.09.2015
(51) Int. Cl.: H02J 50/00, H02J 7/00

(54) **POWER RECEPTION DEVICE, NON-CONTACT POWER TRANSMISSION SYSTEM, AND CHARGING METHOD**

(30) Priority: 19.09.2014 JP 2014191311
(71) Applicant: Panasonic Intellectual Property Management Co., Ltd., Osaka-shi, Osaka 570-6207 (JP)
(72) Inventor: KITAMURA, Hiroyasu, Osaka-shi, Osaka 540-6207 (JP); TSUTSUI, Mami, Osaka-shi, Osaka 540-6207 (JP)
(74) Representative: Grünecker Patent- und Rechtsanwälte PartG mbB
(86) International application number: PCT/JP2015/004792
(87) International publication number: WO 2016/042776

(57) **Abstract**

Power reception device (12) includes power reception resonance circuit (LC2), power reception coil (L3), load (LD), and current limiter (SW1), and receives transmitted power in a non-contact manner. Power reception resonance circuit (LC2) includes converging magnetic flux coil (L2) for collecting magnetic fluxes of an alternating field generated in power transmission resonance circuit (LC1) including power transmission coil (L1) for transmitting power in a non-contact manner. Power reception coil (L3) is magnetically coupled to converging magnetic flux coil (L2) without being electrically connected to power reception resonance circuit (LC2). Load (LD) is electrically connected to power reception coil (L3). Current limiter (SW1) prevents a current from substantially flowing in converging magnetic flux coil (L2). According to the present aspect, in the case where power is not supplied to the load, wasteful power consumption can be reduced.

## Description

### TECHNICAL FIELD

The present disclosure relates to a power reception device that receives transmitted power in a non-contact manner, a non-contact power transmission system that transmits power in a non-contact manner, and a charging method.

### BACKGROUND ART

A conventional non-contact power transmission system of an electromagnetic induction system includes a power transmission device including a power transmission coil for transmitting power in a non-contact manner, and a power reception device including a power reception coil for receiving the power in a non-contact manner. The non-contact power transmission system transmits power from the power transmission device to the power reception device in a non-contact manner, by interlinking magnetic fluxes, generated in the power transmission coil, with the power reception coil.

In recent years, a non-contact power transmission system of a magnetic field resonance system using electromagnetic resonance has received a lot of attention (refer to Patent Literature (PTL) 1). According to the non-contact power transmission system of the magnetic field resonance system, the power reception device further includes a converging magnetic flux coil for collecting magnetic fluxes generated in the power transmission coil. The power reception coil is strongly magnetically coupled to the converging magnetic flux coil. The power reception coil receives the power transmitted from the power transmission coil, via the converging magnetic flux coil.

In the non-contact power transmission system of the magnetic field resonance system, the power transmission coil and the converging magnetic flux coil each constitute a resonance circuit. By including the resonance circuit in this way, the non-contact power transmission system of the magnetic field resonance system extends a power transmission distance, as compared with the electromagnetic induction system.

### Citation List

### Patent Literature

PTL1: Unexamined Japanese Patent Publication No. 2011-45151

### SUMMARY OF THE INVENTION

The power reception device of the non-contact power transmission system includes a load electrically connected to the power reception coil, and the power received by the power reception coil is supplied to the load.

However, according to the above conventional non-contact power transmission system described in PTL1, sufficient study has not been made for a case of supplying no power to a load.

The present disclosure has been made to solve the above problem. An object of the present disclosure is to provide a power reception device capable of reducing wasteful power consumption in the case where power is not supplied to a load, a non-contact power transmission system, and a charging method.

In order to solve the above problem, a power reception device according to an aspect of the present disclosure includes a power reception resonance circuit, a power reception coil, a load, and a current limiter. The power reception resonance circuit includes a converging magnetic flux coil for collecting magnetic fluxes of an alternating field generated in a power transmission resonance circuit including a power transmission coil for transmitting power in a non-contact manner. The power reception coil is magnetically coupled to the converging magnetic flux coil without being electrically connected to the power reception resonance circuit. A load is electrically connected to the power reception coil. The current limiter prevents current from substantially flowing in the converging magnetic flux coil.

According to the present disclosure, in the case where power is not supplied to the load, wasteful power consumption can be reduced.

### BRIEF DESCRIPTION OF DRAWINGS

FIG. 1 schematically illustrates a circuit of a non-contact power transmission system according to a first exemplary embodiment.
FIG. 2 schematically illustrates a configuration of the non-contact power transmission system according to the first exemplary embodiment.
FIG. 3A is a plan view of a power transmission coil.
FIG. 3B is a sectional view of the power transmission coil.
FIG. 4 is a sectional view of a converging magnetic flux coil and a power reception coil.
FIG. 5 is a sectional view schematically illustrating a state where an electric device is placed on a power transmission device.
FIG. 6 is a timing chart illustrating operation of a charger.
FIG. 7 is a timing chart illustrating on/off of switching elements.
FIG. 8 schematically illustrates a circuit of a non-contact power transmission system according to a second exemplary embodiment.
FIG. 9 schematically illustrates a circuit of a non-contact power transmission system according to a third exemplary embodiment.
FIG. 10 schematically illustrates a circuit of a non-contact power transmission system according to a fourth exemplary embodiment.
FIG. 11 is a timing chart schematically illustrating operation of the non-contact power transmission system according to the fourth exemplary embodiment.
FIG. 12 schematically illustrates a circuit of a non-contact power transmission system according to a fifth exemplary embodiment.
FIG. 13 schematically illustrates a circuit of a non-contact power transmission system according to a sixth exemplary embodiment.
FIG. 14 schematically illustrates a circuit of a non-contact power transmission system according to a seventh exemplary embodiment.
FIG. 15 is a timing chart schematically illustrating operation of the non-contact power transmission system according to the seventh exemplary embodiment.
FIG. 16 is a timing chart schematically illustrating operation of a non-contact power transmission system according to an eighth exemplary embodiment.

### DESCRIPTION OF EMBODIMENTS

In general, when power supply to a load becomes unnecessary, a non-contact power transmission system turns off a power supply switch provided between a power reception coil and the load, and stops power supply to the load. For example, in the case where the load is a secondary battery, when the secondary battery is fully charged, the non-contact power transmission system stops power supply to the secondary battery by turning off the power supply switch, in order to prevent overcharge.

However, according to the non-contact power transmission system of the magnetic field resonance system using the converging magnetic flux coil, when a plug of a power transmission device is left in a state of being inserted in an outlet after stopping power supply to the secondary battery by turning off the power supply switch, power transmission from the power transmission coil to the converging magnetic flux coil is continued, and the input current of the power transmission device continues flowing by an amount about the same as that when charging is continued, even when the charging is not performed.

When the power supply switch is in an off state, the power transmitted from the power transmission coil to the converging magnetic flux coil has nowhere to go, because the power is not consumed by the load (the secondary battery). Therefore, a current flowing in the converging magnetic flux coil increases as compared with the case where the power is consumed by the load. As a result, the power reception device wastefully consumes the power, and standby power of the power transmission device is not sufficiently reduced.

A first aspect of the present disclosure provides a power reception device including a power reception resonance circuit, a power reception coil, a load, and a current limiter. The power reception resonance circuit includes a converging magnetic flux coil for collecting magnetic fluxes of an alternating field generated in a power transmission resonance circuit including a power transmission coil for transmitting power in a non-contact manner. The power reception coil is magnetically coupled to the converging magnetic flux coil without being electrically connected to the power reception resonance circuit. A load is electrically connected to the power reception coil. The current limiter prevents a current from substantially flowing in the converging magnetic flux coil.

According to the present aspect, magnetic fluxes of the alternating field generated in the power transmission resonance circuit are collected by the converging magnetic flux coil of the power reception resonance circuit. Therefore, the power reception resonance circuit can receive power from the power transmission resonance circuit with high efficiency.

Magnetic fluxes of the alternating field generated in the converging magnetic flux coil by the power received by the power reception resonance circuit is interlinked with the power reception coil. As a result, the power reception coil can receive the power transmitted from the power transmission coil, via the converging magnetic flux coil.

In the case where power supply to the load is not carried out, the current limiter can prevent a current from substantially flowing in the converging magnetic flux coil, and can reduce wasteful power consumption in the power reception resonance circuit.

A second aspect of the present disclosure provides the power reception device, according to the first aspect, further including a power supply switch provided between the power reception coil and the load, and a current controller that controls the current limiter, for example.

The load is a secondary battery to be charged by supply of direct-current power obtained through rectification of alternating-current power generated in the power reception coil. The current limiter is controlled by the current controller, and may be configured not to limit a current flowing in the converging magnetic flux coil while the power supply switch is maintained in an on state, and prevent a current from substantially flowing in the converging magnetic flux coil while the power supply switch is maintained in an off stare.

According to the present aspect, a current flowing in the converging magnetic flux coil is not limited while the power supply switch is maintained in an on state. Therefore, the secondary battery is charged by power supply from the power reception coil.

While the power supply switch is maintained in an off state, a current does not substantially flow in the converging magnetic flux coil by the current limiter. Therefore, wasteful power consumption in the power reception resonance circuit including the converging magnetic flux coil can be reduced.

A third aspect of the present disclosure provides the power reception device, according to the second aspect, further including a switch controller that controls the power supply switch to switch on and off, for example. The switch controller determines whether the secondary battery is fully charged, and may turn off the power supply switch in the case where the secondary battery is fully charged.

According to the present aspect, in the case where the secondary battery is fully charged, the switch controller can securely stop the charging current by turning off the power supply switch.

A fourth aspect of the present disclosure provides the power reception device, according to the second aspect or the third aspect, further including a pulse-width-modulation (PWM) controller that performs PWM control of the power supply switch, for example. The current limiter is controlled by the current controller, and may be configured to prevent a current from substantially flowing in the converging magnetic flux coil during an off period of the power supply switch by the PWM control.

According to the present aspect, when the power supply switch is turned on/off by the PWM control, the charging of the secondary battery is controlled by an on-duty ratio of the PWM control.

During an on period of the power supply switch by the PWM control, a current flows in the converging magnetic flux coil. Therefore, power controlled by the on-duty ratio is supplied from the power reception coil to the secondary battery. During the off period of the power supply switch by the PWM control, a current does not substantially flow in the converging magnetic flux coil, and wasteful power consumption in the power reception resonance circuit including the converging magnetic flux coil can be reduced.

In the power reception device according to a fifth aspect of the present disclosure, the current limiter according to the second aspect to the fourth aspect includes a switching element which is electrically connected to the power reception coil and is not electrically connected to the power reception resonance circuit. The switching element prevents a current from substantially flowing in the power reception coil.

According to the present aspect, the switching element can prevent a current from substantially flowing in the power reception coil and the converging magnetic flux coil. As a result, wasteful power consumption in the power reception resonance circuit can be reduced.

In the power reception device according to a sixth aspect of the present disclosure, the switching element according to the fifth aspect is an N-channel metal-oxide semiconductor field-effect transistor (MOSFET). The current limiter according to the fifth aspect further includes a diode connected in series to the MOSFET. An anode of the diode is connected to a first end of the power reception coil, and a cathode of the diode is connected to a drain of the MOSFET. A source of the MOSFET is connected to a second end of the power reception coil.

According to the present aspect, because the switching element is the MOSFET, a compact device can be realized in a simple configuration. Because an equivalent parasitic diode (a body diode) is incorporated in the MOSFET, when only the MOSFET is connected, it is not possible to perform rectification.

Therefore, a diode is connected to the MOSFET in series in a direction opposite to the body diode, and the series circuit is connected to both ends of the power reception coil. To facilitate drive of the MOSFET, the MOSFET is connected to a ground side of the power reception coil.

According to the present aspect, the ends of the power reception coil are short-circuited during only when the MOSFET is in the on state, and it becomes possible to prevent a current from substantially flowing in the power reception coil and the converging magnetic flux coil.

A seventh aspect of the present disclosure provides the power reception device, according to the fifth aspect, further including a rectifying and smoothing circuit that converts alternating-current power generated in the power reception coil to direct-current power. In the present aspect, the switching element is the N-channel MOSFET that has the source connected to a ground side between the rectifying and smoothing circuit and the load, and has the drain connected to a positive voltage side of the rectifying and smoothing circuit between the rectifying and smoothing circuit and the load, for example.

According to the present aspect, although the MOSFET incorporates the body diode, because the rectifying and smoothing circuit outputs only a positive voltage, no current flows in the body diode. Therefore, only when the MOSFET is in the on state, the power reception coil and both ends of the rectifying and smoothing circuit are short-circuited.

As a result, a current does not substantially flow in the power reception coil. Because the MOSFET is disposed between the rectifying and smoothing circuit and the load, a diode connected in series to the MOSFET is not necessary. Because the switching element is the MOSFET, a compact device can be realized in a simple configuration.

A power reception device according to an eighth aspect of the present disclosure further includes a control circuit that controls the power supply switch and the switching element. The switching element is a first semiconductor switch having a first control terminal for controlling the switching element. The power supply switch is a second semiconductor switch having a second control terminal for controlling the power supply switch.

The control circuit includes a first transistor connected between the first control terminal and a ground and configured to turn off the first semiconductor switch when the first transistor is turned on, a second transistor connected between the second control terminal and the ground and configured to turn on the second semiconductor switch when the second transistor is turned on, and a transistor controller including an output terminal connected between a control terminal of the first transistor and a control terminal of the second transistor.

The transistor controller outputs from the output terminal an on signal for turning on the first transistor and the second transistor or an off signal for turning off the first transistor and the second transistor.

According to the present aspect, when the on signal is output from the output terminal of the transistor controller, the first semiconductor switch is turned off and the second semiconductor switch is turned on. When the off signal is output from the output terminal of the transistor controller, the first semiconductor switch is turned on and the second semiconductor switch is turned off.

As a result, it is possible to control waveforms such that a waveform of a signal for controlling on/off of the switching element is a waveform obtained by inverting a waveform of a signal for controlling on/off of the power supply switch. Further, a signal output from the output terminal of the transistor controller can be shared for on/off of the switching element and on/off of the power supply switch. As a result, a configuration of the transistor controller can be simplified.

A ninth aspect of the present disclosure provides a non-contact power transmission system including the power reception device according to any one of the first aspect to the eighth aspect and a power transmission device. The power transmission device includes a power transmission resonance circuit, and a drive circuit that supplies alternating-current power to the power transmission resonance circuit.

According to the present aspect, in the case where power supply to the load is not carried out, the current limiter can prevent a current from substantially flowing in the converging magnetic flux coil, and can reduce wasteful power consumption in the power reception resonance circuit.

When a current does not substantially flow in the converging magnetic flux coil, magnetic fluxes of the alternating field generated in the power transmission resonance circuit are not collected by the converging magnetic flux coil of the power reception resonance circuit. As a result, the alternating-current power supplied from the drive circuit to the power transmission resonance circuit decrease. Therefore, in the case where power supply to the load is not carried out, standby power in the drive circuit of the power transmission device can be reduced.

A tenth aspect of the present disclosure provides a charging method for a non-contact charge system including a power transmission device including: a power transmission resonance circuit having a power transmission coil for transmitting power in a non-contact manner; and a power reception device including a power reception resonance circuit, a power reception coil, a secondary battery, a power supply switch, and a switching element.

In the power reception device, the power reception resonance circuit has a converging magnetic flux coil for collecting magnetic fluxes of the alternating field generated in the power transmission resonance circuit. The power reception coil is magnetically coupled to the converging magnetic flux coil. The secondary battery is electrically connected to the power reception coil. The power supply switch is provided between the power reception coil and the secondary battery. When the switching element is turned on, the switching element prevents a current from substantially flowing in the converging magnetic flux coil.

The charging method includes a charging step of starting charging of a secondary battery by turning off the switching element and turning on the power supply switch, a PWM control step of performing PWM control of the switching element and the power supply switch from a predetermined time point at which the secondary battery is close to being fully charged, and a charging completion step of turning on the switching element and turning off the power supply switch when the secondary battery is fully charged.

In the PWM control step, the switching element is maintained in an off state during an on period of the power supply switch, and the switching element is maintained in an on state during an off period of the power supply switch.

According to the present aspect, at a start time of charging the secondary battery, the switching element is turned off and the power supply switch is turned on. Therefore, a current flowing in the converging magnetic flux coil is not limited, and power supply from the power reception coil to the secondary battery becomes possible.

From the predetermined time point at which the secondary battery is close to being fully charged, PWM control of the switching element and the power supply switch is performed. According to the PWM control, the switching element is maintained in an off state during an on period of the power supply switch, and the switching element is maintained in an on state during an off period of the power supply switch.

Therefore, during a period when the secondary battery is charged, a current flowing in the converging magnetic flux coil is not limited. Accordingly, the secondary battery is suitably charged. During a period when the secondary battery is not charged, a current flowing in the converging magnetic flux coil is limited. Therefore, wasteful power consumption in the converging magnetic flux coil can be reduced.

When the secondary battery is fully charged, the switching element is turned on and the power supply switch is turned off, and power supply from the power reception coil to the secondary battery is stopped because the power supply switch is in the off state.

As a result, overcharge of the secondary battery can be prevented. The turning on of the switching element limits a current flowing in the converging magnetic flux coil. Therefore, wasteful power consumption in the converging magnetic flux coil can be reduced.

### EXEMPLARY EMBODIMENTS

Hereinafter, exemplary embodiments of the present disclosure will be described with reference to the drawings. The following exemplary embodiments are an example of embodying the present disclosure, and do not limit a technical range of the present disclosure. Through the drawings, the same reference marks are used to designate the same constitutional elements.

### FIRST EXEMPLARY EMBODIMENT

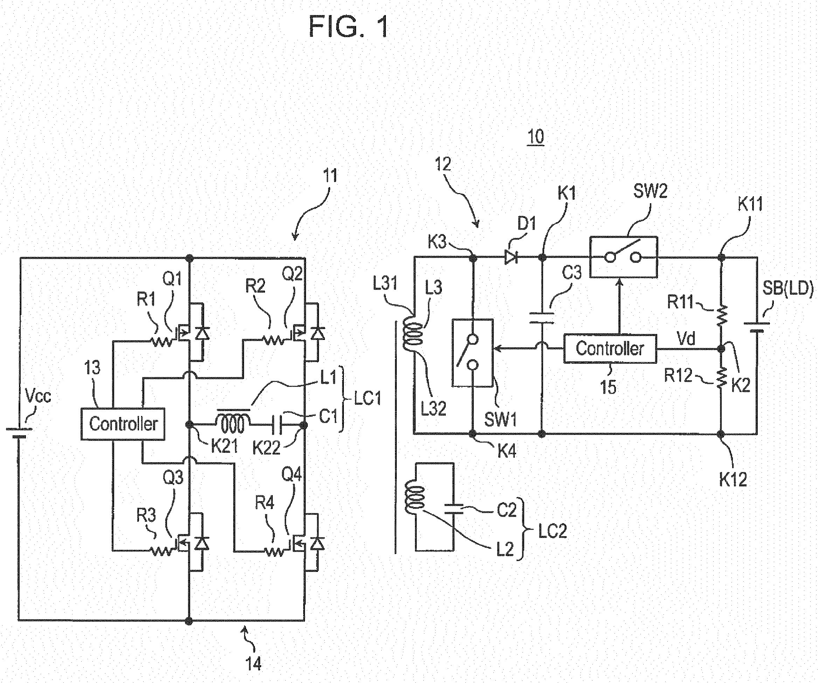

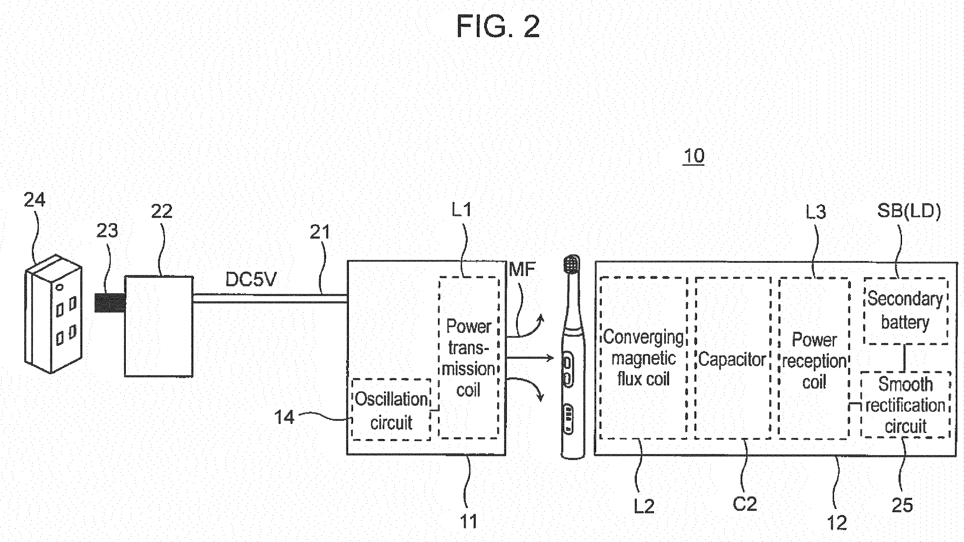

FIG. 1 schematically illustrates a circuit of non-contact power transmission system 10 according to a first exemplary embodiment. FIG. 2 schematically illustrates a configuration of non-contact power transmission system 10 according to the first exemplary embodiment. As illustrated in FIGS. 1 and 2, non-contact power transmission system 10 (an example of the non-contact charge system) according to the first exemplary embodiment includes charger 11 (an example of the power transmission device), and electric device 12 (an example of the power reception device) not electrically connected to charger 11.

As illustrated in FIG. 2, adaptor 22 is connected to charger 11 via wiring cord 21. Adaptor 22 includes a rectification circuit, and a known power source circuit such as a DC-DC converter. When plug 23 of adaptor 22 is inserted in outlet 24 of a commercial alternating-current power source AC 100 V, adaptor 22 constitutes direct-current power source Vcc. In the present exemplary embodiment, direct-current power source Vcc outputs DC 5 V, for example.

In FIG. 1, charger 11 includes switching elements Q1 to Q4, power transmission coil L1, capacitor C1, controller 13, and gate resistors R1 to R4.

In the first exemplary embodiment, a P-channel metal-oxide-semiconductor field effect transistor (MOSFET) is used for switching elements Q1, Q2, and an N-channel MOSFET is used for switching elements Q3, Q4. Gates of switching elements Q1 to Q4 are connected to controller 13 via gate resistors R1 to R4. Oscillation circuit 14 (an example of the drive circuit) includes switching elements Q1 to Q4, controller 13, and gate resistors R1 to R4.

Power transmission coil L1 transmits power to electric device 12. Capacitor C1 is connected in series to power transmission coil L1. Power transmission resonance circuit LC1 includes power transmission coil L1 and capacitor C1. Power transmission resonance circuit LC1 is connected in series between connection point K21 between switching element Q1 and switching element Q3 and connection point K22 between switching element Q2 and switching element Q4.

Controller 13 controls switching elements Q1 to Q4 to switch on and off. Controller 13 alternately repeats the operation of turning on switching elements Q1, Q4 and the operation of turning off switching elements Q2, Q3, and the operation of turning off switching elements Q1, Q4 and the operation of turning on switching elements Q2, A3. Controller 13 controls switching elements Q1 to Q4 to switch on and off at a drive frequency Fc = 400 kHz, for example. Accordingly, alternating-current power is supplied to power transmission resonance circuit LC1, and alternating flux is generated in power transmission coil L1.

As illustrated in FIG. 2, in the first exemplary embodiment, electric device 12 is an electric toothbrush, for example. Electric device 12 includes converging magnetic flux coil L2, capacitor C2, power reception coil L3, diode D1, capacitor C3, load LD, switching elements SW1, SW2, resistors R11, R12, and controller 15.

Converging magnetic flux coil L2 collects magnetic fluxes by the alternating field generated in power transmission coil L1. Capacitor C2 is connected to converging magnetic flux coil L2. Power reception coil L3 is magnetically coupled to converging magnetic flux coil L2. Power reception resonance circuit LC2 includes converging magnetic flux coil L2 and capacitor C2. Converging magnetic flux coil L2 receives magnetic fluxes generated in power transmission coil L1, and delivers the magnetic fluxes to power reception coil L3. As illustrated in FIG. 1, power reception resonance circuit LC2 is not electrically connected to power reception coil L3 and the like.

An anode of diode D1 is connected to one end L31 of power reception coil L3. Capacitor C3 is connected between a cathode of diode D1 and other end L32 of power reception coil L3. Diode D1 is a rectification circuit that rectifies the alternating-current power of power reception coil L3. Capacitor C3 smoothes power rectified by diode D1. That is, diode D1 and capacitor C3 constitute rectifying and smoothing circuit 25 (see FIG. 2), and convert the alternating-current power to direct-current power.

In the first exemplary embodiment, load LD is a secondary battery such as a lithium ion battery or a nickel hydrogen battery, for example Hereinafter, load LD will be also referred to as secondary battery SB. Secondary battery SB is charged by the direct-current power smoothed by capacitor C3.

In the first exemplary embodiment, switching elements SW1, SW2 are mechanical relays, for example. Controller 15 controls switching elements SW1, SW2 to switch on and off. Switching element SW1 (an example of the current limiter) is connected in parallel to power reception coil L3. That is, switching element SW1 is connected between connection point K3 between one end L31 of power reception coil L3 and the anode of diode D1, and connection point K4 between other end L32 of power reception coil L3 and a negative electrode of secondary battery SB. When switching element SW1 is turned on, power reception coil L3 is short-circuited.

Switching element SW2 (an example of the power supply switch) is connected between connection point K1 between the cathode of diode D1 and capacitor C3, and a positive electrode of secondary battery SB. When switching element SW2 is turned on, secondary battery SB can be charged, and when switching element SW2 is turned off, charging of secondary battery SB is stopped.

A series circuit of resistors R11, R12 is connected in parallel to secondary battery SB. That is, the series circuit of resistors R11, R12 is connected between connection point K11 connected to a positive electrode of secondary battery SB, and connection point K12 connected to the negative electrode of secondary battery SB. Connection point K2 between resistor R11 and resistor R12 is connected to controller 15. With the present configuration, a terminal voltage of secondary battery SB is divided by resistors R11, R12, and divided voltage Vd is input to controller 15.

Controller 15 (an example of the current controller, an example of the switch controller) determines, based on voltage Vd, whether secondary battery SB is fully charged. When controller 15 determines that secondary battery SB is fully charged, controller 15 turns on switching element SW1, and turns off switching element SW2. When controller 15 determines that secondary battery SB is not fully charged, controller 15 turns off switching element SW1, and turns on switching element SW2.

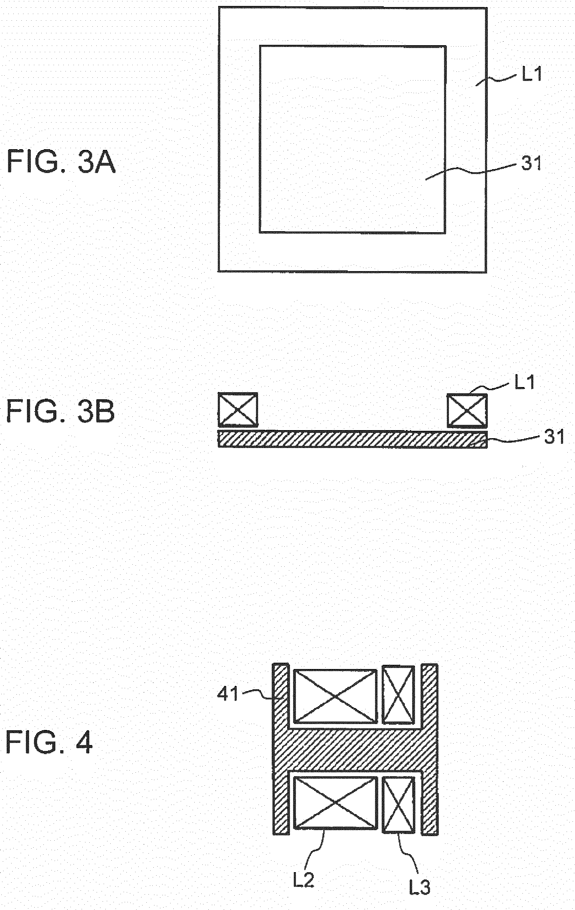

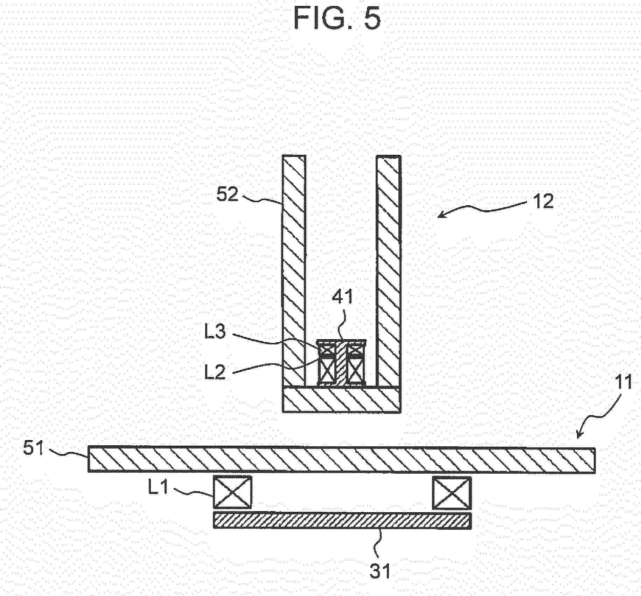

FIG. 3A is a plan view of power transmission coil L1. FIG. 3B is a sectional view of power transmission coil L1. FIG. 4 is a sectional view of converging magnetic flux coil L2 and power reception coil L3. FIG. 5 is a sectional view schematically illustrating a state where electric device 12 is placed on charger 11.

Power transmission coil L1 is a rectangular planar coil formed by having a copper wire spirally wound, for example, as illustrated in FIGS. 3A and 3B. As illustrated in FIGS. 3A and 3B, flat plate-like magnetic substance (for example, ferrite) 31 is disposed close to power transmission coil L1, parallel to a magnetic-flux interlinked surface of power transmission coil L1.

As illustrated in FIG. 4, converging magnetic flux coil L2 and power reception coil L3 are formed by having a copper wire wound spirally around a center axis of magnetic substance (for example, ferrite) 41 of an H shape in a cross section, for example. As illustrated in FIG. 4, converging magnetic flux coil L2 and power reception coil L3 are disposed in superposition with each other. Based on such a disposition, converging magnetic flux coil L2 and power reception coil L3 are magnetically coupled.

As illustrated in FIG. 5, converging magnetic flux coil L2 is positioned on an outer side of electric device 12 than power reception coil L3 is. That is, as illustrated in FIG. 5, when casing 52 of electric device 12 is placed on ceiling plate 51 of charger 11, converging magnetic flux coil L2 is disposed at a position nearer power transmission coil L1 than power reception coil L3 is.

Inductance of power transmission coil L1 and capacitance of capacitor C1 are set so that resonance frequency F1 of power transmission resonance circuit LC1 becomes about 350 kHz, for example. Inductance of converging magnetic flux coil L2 and capacitance of capacitor C2 are set so that resonance frequency F2 of power reception resonance circuit LC2 becomes about 400 kHz, for example.

As described above, controller 13 controls switching elements Q1 to Q4 to switch on and off at a drive frequency Fc = 400 kHz. Therefore, drive frequency Fc and resonance frequency F2 of power reception resonance circuit LC2 are set to substantially equal values.

In the present exemplary embodiment, although drive frequency Fc and resonance frequency F2 of power reception resonance circuit LC2 are set to substantially equal values, drive frequency Fc and resonance frequency F2 of power reception resonance circuit LC2 may be set to slightly different values. For example, because of variations and the like in components of power reception resonance circuit LC2, drive frequency Fc and resonance frequency F2 of power reception resonance circuit LC2 may be in values about 2% different from each other, as a result.

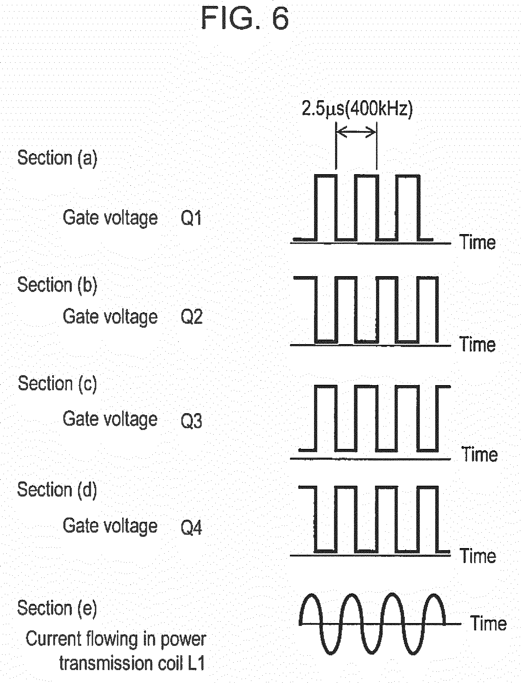

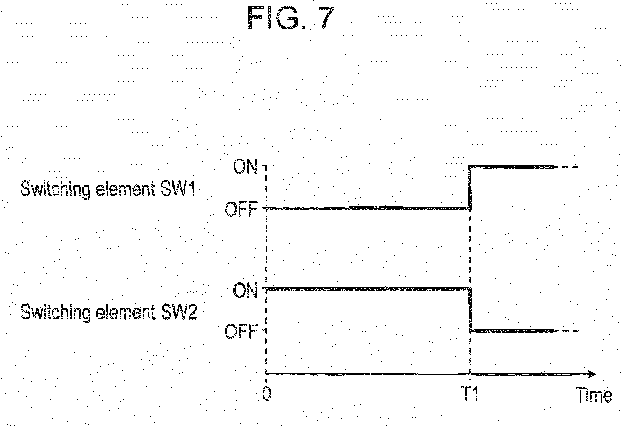

FIG. 6 is a timing chart illustrating operation of charger 11. Section (a) in FIG. 6 illustrates on/off of switching element Q1. Section (b) in FIG. 6 illustrates on/off of switching element Q2. Section (c) in FIG. 6 illustrates on/off of switching element Q3. Section (d) in FIG. 6 illustrates on/off of switching element Q4. Section (e) in FIG. 6 illustrates a current waveform of current flowing in power transmission coil L1. FIG. 7 is a timing chart illustrating on/off of switching elements SW1, SW2.

Hereinafter, operation of non-contact power transmission system 10 according to the first exemplary embodiment will be described with reference to FIGS. 1, 6, and 7.

First, as illustrated in FIG. 7, at an operation start time, controller 15 turns off switching element SW1 and turns on switching element SW2. In this state, adaptor 22 converts AC 100 V of the commercial alternating-current power source to DC 5 V. The DC 5 V is applied to a full-bridge circuit including switching elements Q1 to Q4.

As illustrated in sections (a) to (d) in FIG. 6, switching elements Q1 to Q4 are turned on/off in a cycle 2.5 µsec (that is, a drive frequency Fc = 400 kHz), according to the gate voltage that is input from controller 13 via gate resistors R1 to R4. By the operation of switching elements Q1 to Q4, a high-frequency alternating-current is supplied to power transmission coil L1, and power transmission coil L1 is excited, as illustrated in section (e) in FIG. 6.

Magnetic fluxes generated in power transmission coil L1 are interlinked with converging magnetic flux coil L2 and power reception coil L3, and alternating power is generated in converging magnetic flux coil L2 and power reception coil L3. At this time, resonance frequency F2 (F2 = 400 kHz in the present exemplary embodiment) of power reception resonance circuit LC2 including converging magnetic flux coil L2 and capacitor C2 coincides with drive frequency Fc (Fc = 400 kHz in the present exemplary embodiment). Therefore, as compared with power reception coil L3, converging magnetic flux coil L2 has stronger magnetic fluxes that are interlinked, and larger alternating power that is generated.

Magnetic fluxes are generated by the alternating power generated in converging magnetic flux coil L2, and the magnetic fluxes are supplied to power reception coil L3. As illustrated in FIG. 5, a distance between converging magnetic flux coil L2 and power reception coil L3 is sufficiently shorter than a distance between power transmission coil L1 and power reception coil L3. Therefore, a coupling coefficient between converging magnetic flux coil L2 and power reception coil L3 is sufficiently larger than a coupling coefficient between power transmission coil L1 and power reception coil L3. Therefore, magnetic fluxes are efficiently supplied from converging magnetic flux coil L2 to power reception coil L3.

At the operation start time, because switching element SW1 is turned off, switching element SW1 have no influence on power reception coil L3. Therefore, alternating power is generated by magnetic fluxes interlinked with power reception coil L3. The alternating power is rectified by diode D1, and is smoothed by capacitor C3. At the operation start time, because switching element SW2 is turned on, secondary battery SB is charged by the power smoothed by capacitor C3.

Controller 15 detects voltage Vd divided by resistors R11, R12. When voltage Vd reaches predetermined reference voltage Vf, controller 15 determines that secondary battery SB is fully charged. As illustrated in FIG. 7, when controller 15 determines that secondary battery SB is fully charged at time T1, controller 15 turns on switching element SW1 and turns off switching element SW2.

As described above, at time T1, switching element SW2 is turned off and power supply to secondary battery SB is stopped. As a result, overcharge of secondary battery SB is prevented.

As can be understood from FIGS. 1 and 2, when a state where plug 23 of adaptor 22 is inserted in outlet 24 is continued, generation of magnetic fluxes in power transmission coil L1 is continued. This state is continued even after switching element SW2 is turned off. Therefore, in the case where switching element SW1 is maintained in the off state, generation of the alternating power in converging magnetic flux coil L2 is also continued.

Further, when switching element SW2 is turned off, the alternating power generated in converging magnetic flux coil L2 is not consumed by load (secondary battery) LD. Accordingly, the alternating power generated in converging magnetic flux coil L2 has nowhere to go. Therefore, in the case where switching element SW1 is maintained in the off state, a current flowing in converging magnetic flux coil L2 increases as compared with a current during the charging. Accordingly, wasteful power consumption occurs in power reception resonance circuit LC2 (converging magnetic flux coil L2 and capacitor C2), and a temperature of casing 52 of electric device 12 rises.

In order to avoid this situation, in the first exemplary embodiment, switching element SW1 is turned on at the same time when switching element SW2 is turned off at time T1. By the operation of switching element SW1, both ends (L31, L32) of power reception coil L3 are short-circuited, and no current flows in power reception coil L3.

Then, converging magnetic flux coil L2 operates in the same manner as that when both ends of converging magnetic flux coil L2 are short-circuited, and no current flows in converging magnetic flux coil L2 either. This is, because a magnetic coupling coefficient between converging magnetic flux coil L2 and power reception coil L3 is large, converging magnetic flux coil L2 receives a large influence of power reception coil L3.

According to the first exemplary embodiment, even in the case where generation of magnetic fluxes in power transmission coil L1 of charger 11 is continued, wasteful power consumption in power reception resonance circuit LC2 (converging magnetic flux coil L2 and capacitor C2) can be reduced.

While switching element SW1 is maintained in the on state, a current flowing in power transmission coil L1 substantially decreases as compared with a current during a charging of secondary battery SB. According to the first exemplary embodiment, in the state where electric device 12 is placed on charger 11 and secondary battery SB is not charged, standby power generated in charger 11 can be reduced.

### SECOND EXEMPLARY EMBODIMENT

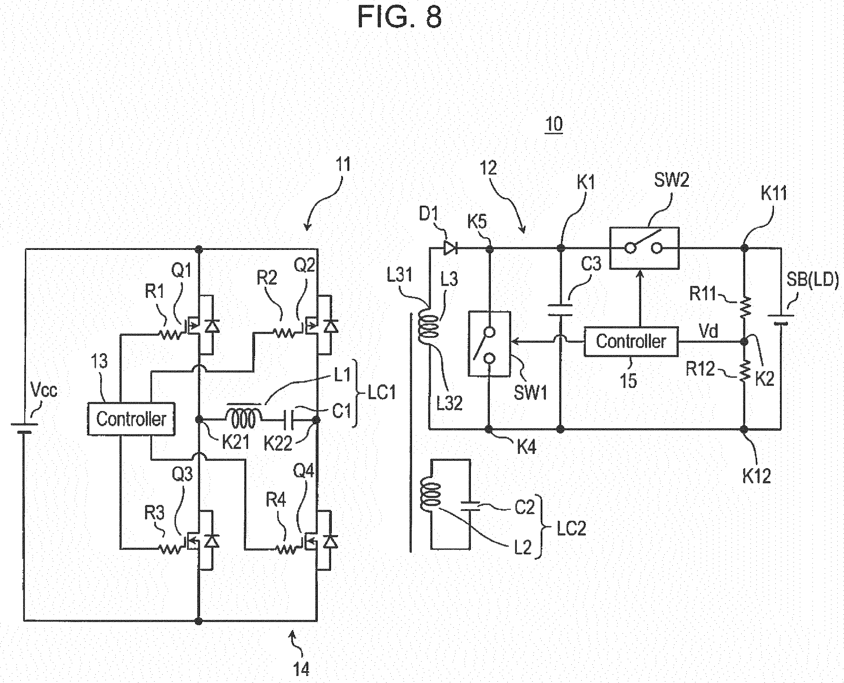

FIG. 8 schematically illustrates a circuit of non-contact power transmission system 10 according to a second exemplary embodiment. In the second exemplary embodiment, a connection position of switching element SW1 is different from that in the first exemplary embodiment. Hereinafter, the second exemplary embodiment will be described by focusing on a difference from the first exemplary embodiment.

In the first exemplary embodiment, as illustrated in FIG. 1, switching element SW1 is connected to an anode side of diode D1. That is, when switching element SW1 is turned on, switching element SW1 short-circuit between both ends (L31, other end L32) of power reception coil L3.

On the other hand, in the second exemplary embodiment, as illustrated in FIG. 8, switching element SW1 is connected to a cathode side of diode D1. That is, switching element SW1 is connected between connection point K5 between the cathode of diode D1 and connection point K1, and connection point K4. With this configuration, when switching element SW1 is turned on, switching element SW1 short-circuits between other end L32 of power reception coil L3 and the cathode of diode D1. Therefore, in the second exemplary embodiment, even when switching element SW1 is turned on, a current flows in power reception coil L3 by the amount of a forward voltage of diode D1.

Accordingly, some current flows in power reception coil L3, and only a few amount of current also flows in converging magnetic flux coil L2. However, as compared with the case where switching element SW1 is not provided, a current flowing in converging magnetic flux coil L2 becomes sufficiently small. Therefore, in the second exemplary embodiment, wasteful power consumption in converging magnetic flux coil L2 and capacitor C2 can be also reduced, and standby power generated in charger 11 can be also reduced, in a similar manner to that in the first exemplary embodiment.

In the present specification, "a current does not substantially flow in converging magnetic flux coil L2" includes the case where weak current flows in converging magnetic flux coil L2 to an extent not to excessively generate heat in converging magnetic flux coil L2 and capacitor C2, in addition to the case where a current does not flow at all. That is, "a current does not substantially flow in converging magnetic flux coil L2" means "a value of a current flowing in converging magnetic flux coil L2 is 0 or a value near 0".

### THIRD EXEMPLARY EMBODIMENT

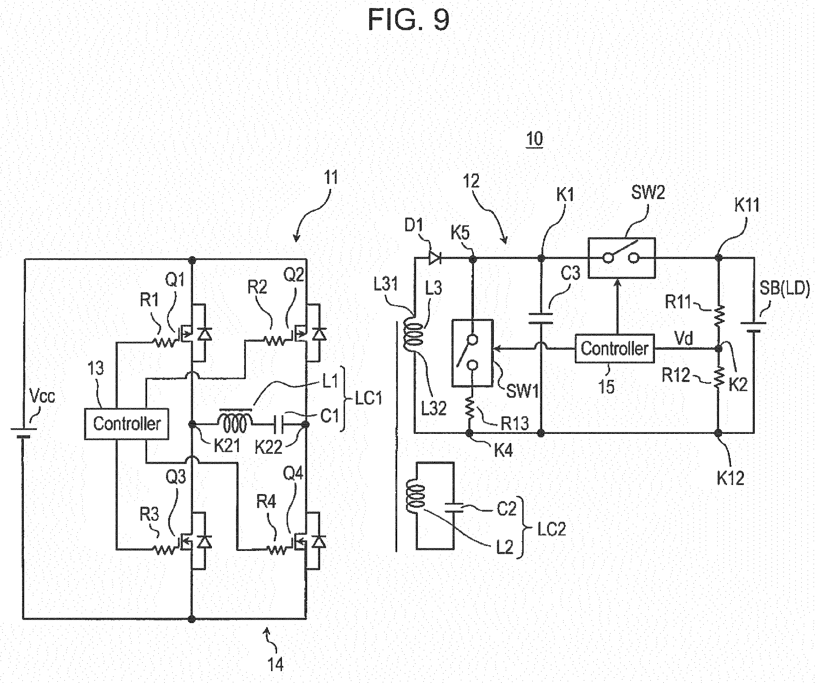

FIG. 9 schematically illustrates a circuit of non-contact power transmission system 10 according to a third exemplary embodiment. In the third exemplary embodiment, a resistor is added to the second exemplary embodiment. Hereinafter, the third exemplary embodiment will be described by focusing on a difference from the second exemplary embodiment.

In the third exemplary embodiment, as illustrated in FIG. 9, switching element SW1 is connected to the cathode side of diode D1 in a similar manner to that in the second exemplary embodiment (see FIG. 8). That is, switching element SW1 is connected between connection point K5 and connection point K4. Further, in the third exemplary embodiment, resistor R13 of a low resistance value (for example, 10 Ω) is connected in series between switching element SW1 and connection point K4.

As described above, in the second exemplary embodiment, a current keeps flowing in switching element SW1 by the amount of the forward voltage of diode D1. On the other hand, in the third exemplary embodiment, resistor R13 is inserted in series to switching element SW1. Therefore, the current flowing in switching element SW1 based on the forward voltage of diode D1 can be reduced by resistor R13. Accordingly, switching element SW1 can reduce wasteful power consumption.

### FOURTH EXEMPLARY EMBODIMENT

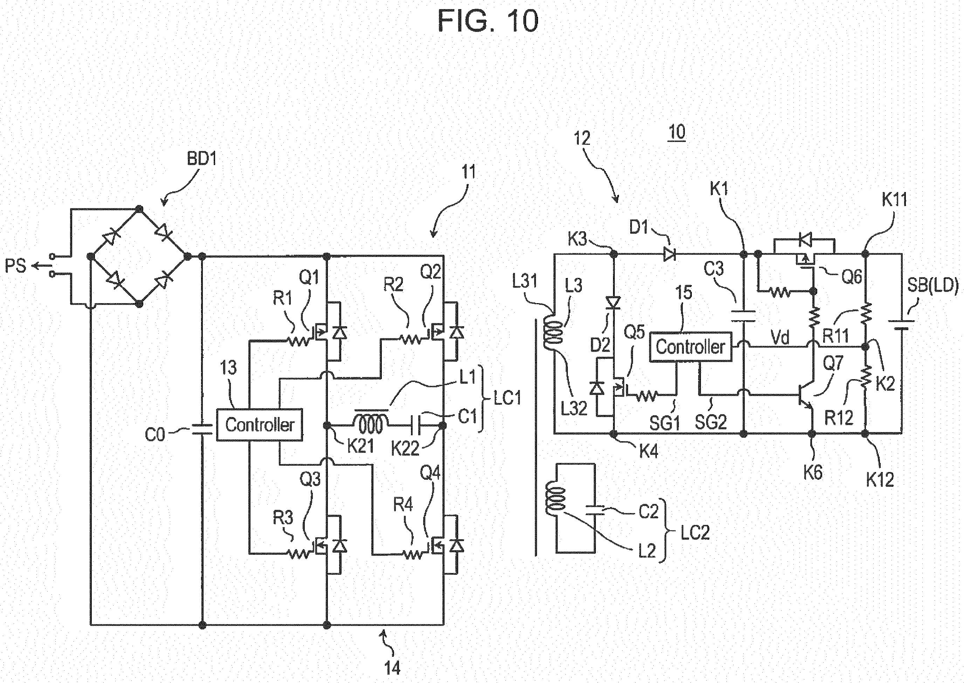

FIG. 10 schematically illustrates a circuit of non-contact power transmission system 10 according to a fourth exemplary embodiment. Hereinafter, the fourth exemplary embodiment will be described by focusing on a difference from the first exemplary embodiment.

In the fourth exemplary embodiment, charger 11 includes rectification circuit BD1 that converts alternating-current power, input from commercial alternating-current power source PS, to direct-current power, in place of adaptor 22 (see FIG. 2) constituting direct-current power source Vcc, and capacitor C0 that smoothes the rectified power. Rectification circuit BD1 is a bridge-shaped full-wave rectification circuit including four diodes.

In the fourth exemplary embodiment, AC 100 V of commercial alternating-current power source PS is rectified by rectification circuit BD1, smoothed by capacitor C0, and is converted to DC 141 V. The DC 141 V is applied to a full-bridge circuit including switching elements Q1 to Q4. Other configuration and operation of charger 11 are the same as those in the first to third exemplary embodiments.

In the fourth exemplary embodiment, electric device 12 includes diode D2 and semiconductor switch Q5 (an example of the switching element), in place of switching element SW1 in the first exemplary embodiment (see FIG. 1), and includes semiconductor switch Q6 (an example of the power supply switch) and transistor Q7, in place of switching element SW2.

As illustrated in FIG. 10, an N-channel MOSFET is used for semiconductor switch Q5, and a P-channel MOSFET is used for semiconductor switch Q6. An anode of diode D2 is connected to connection point K3 between one end L31 of power reception coil L3 and an anode of diode D1.

A cathode of diode D2 is connected to a drain of semiconductor switch Q5. A source of semiconductor switch Q5 is connected to connection point K4 between other end L32 of power reception coil L3 and the negative electrode of secondary battery SB. A gate of semiconductor switch Q5 is connected to controller 15 via a gate resistor.

A source of semiconductor switch Q6 (an example of the second semiconductor switch) is connected to connection point K1 between a cathode of diode D1 and capacitor C3. A drain of semiconductor switch Q5 is connected to connection point K11 (a positive electrode of secondary battery SB). A gate (an example of the second control terminal) of semiconductor switch Q6 is connected to a collector of NPN bipolar type transistor Q7 (an example of the second transistor) for example, via a gate resistor.

The source of semiconductor switch Q6 and the gate of semiconductor switch Q6 are connected to each other via a resistor. An emitter of transistor Q7 is connected to connection point K6 between other end L32 of power reception coil L3 and the negative electrode of secondary battery SB. A base of transistor Q7 is connected to controller 15.

As illustrated in FIG. 10, the MOSFET incorporates an equivalent parasitic diode (a body diode) between the source and the drain, as a structure. In the fourth exemplary embodiment, diode D2 is connected in an opposite direction to a body diode of semiconductor switch Q5. Accordingly, a current flows in semiconductor switch Q5 only when semiconductor switch Q5 is in the on state.

Controller 15 operates in a similar manner to that in the first exemplary embodiment. That is, controller 15 determines whether secondary battery SB is fully charged, based on voltage Vd. When controller 15 determines that secondary battery SB is fully charged, controller 15 turns on semiconductor switch Q5 and turns off semiconductor switch Q6. When controller 15 determines that secondary battery SB is not fully charged, controller 15 turns off semiconductor switch Q5 and turns on semiconductor switch Q6.

Controller 15 controls on/off of semiconductor switches Q5, Q6 by outputting signals SG1, SG2. That is, when high-level signal SG1 is output from controller 15, semiconductor switch Q5 is turned on. When high-level signal SG2 is output from controller 15, transistor Q7 is turned on. When transistor Q7 is turned on, semiconductor switch Q6 is turned on.

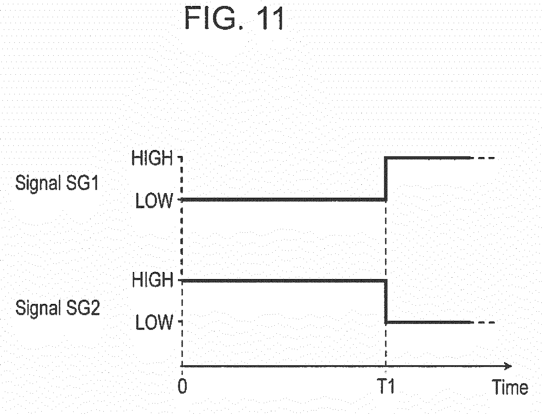

FIG. 11 is a timing chart schematically illustrating operation of non-contact power transmission system 10 according to the fourth exemplary embodiment. FIG. 11 schematically illustrates signal levels of signals SG1, SG2 output from controller 15. Operation of non-contact power transmission system 10 according to the fourth exemplary embodiment will be described with reference to FIGS. 10 and 11.

At the operation start time, as illustrated in FIG. 11, controller 15 outputs low-level signal SG1, outputs high-level signal SG2, turns off semiconductor switch Q5, and turns on semiconductor switch Q6. In this state, non-contact power transmission system 10 according to the fourth exemplary embodiment operates in a similar manner to that in the first exemplary embodiment.

Controller 15 detects voltage Vd divided by resistors R11, R12, When voltage Vd reaches predetermined reference voltage Vf, controller 15 determines that secondary battery SB is fully charged.

As illustrated in FIG. 11, when controller 15 determines that secondary battery SB is fully charged at time T1, controller 15 switches signal SG1 to a high level and switches signal SG2 to a low level, and turns on semiconductor switch Q5 and turns off semiconductor switch Q6.

According to the fourth exemplary embodiment, operation is performed in a similar manner to that in the first exemplary embodiment, and effects similar to those in the first exemplary embodiment can be obtained.

### FIFTH EXEMPLARY EMBODIMENT

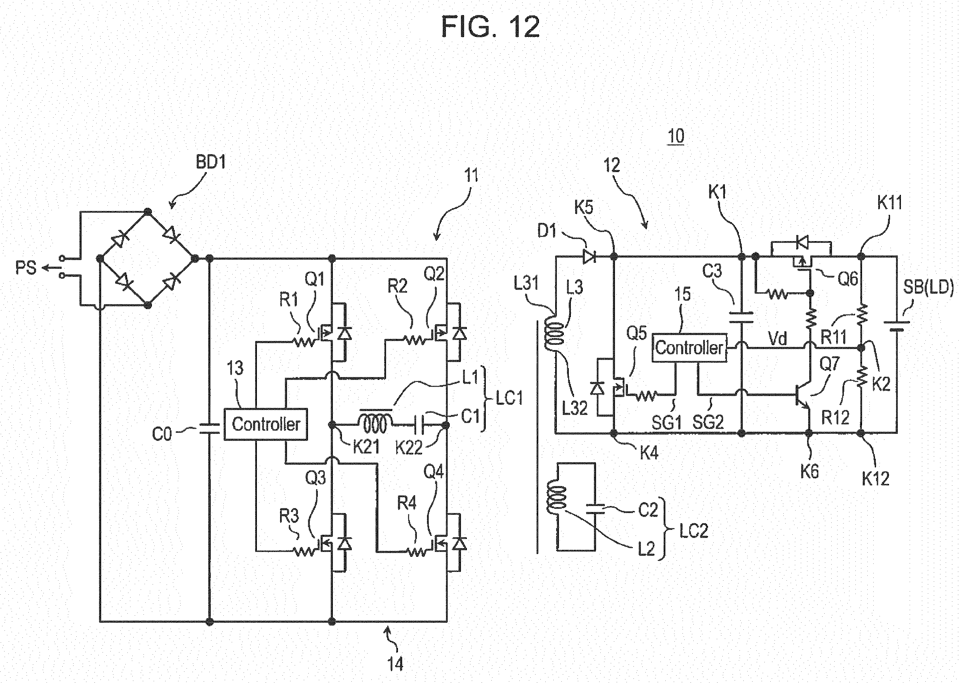

FIG. 12 schematically illustrates a circuit of non-contact power transmission system 10 according to a fifth exemplary embodiment. In the fifth exemplary embodiment, diode D2 of the fourth exemplary embodiment (see FIG. 10) is not included, and a connection position of semiconductor switch Q5 is different from that in the fourth exemplary embodiment. Other configurations and operation in the fifth exemplary embodiment are similar to those in the fourth exemplary embodiment. Hereinafter, the fifth exemplary embodiment will be described by focusing on a difference from the fourth exemplary embodiment.

As illustrated in FIG. 12, in the fifth exemplary embodiment, a source of semiconductor switch Q5 is connected to connection point K4 connected to the negative electrode of secondary battery SB. A drain of semiconductor switch Q5 is connected to connection point K5 between the cathode of diode D1, that is, an output terminal on a positive voltage side of the rectification circuit, and connection point K1 on a positive electrode side of secondary battery SB.

That is, semiconductor switch Q5 is an N-channel MOSFET having a source connected to a ground side of the rectification circuit and having a drain connected to a positive voltage side of the rectification circuit.

As described above, in the fifth exemplary embodiment, the drain of semiconductor switch Q5 is connected to the cathode side of diode D1. Therefore, in the case where semiconductor switch Q5 is in the off state, no current flows in the diode incorporated in semiconductor switch Q5.

Therefore, a circuit configuration in the fifth exemplary embodiment (see FIG. 12) does not require diode D2 as described in the fourth exemplary embodiment (see FIG. 10). According to the fifth exemplary embodiment, a circuit configuration can be simplified as compared with that in the fourth exemplary embodiment.

### SIXTH EXEMPLARY EMBODIMENT

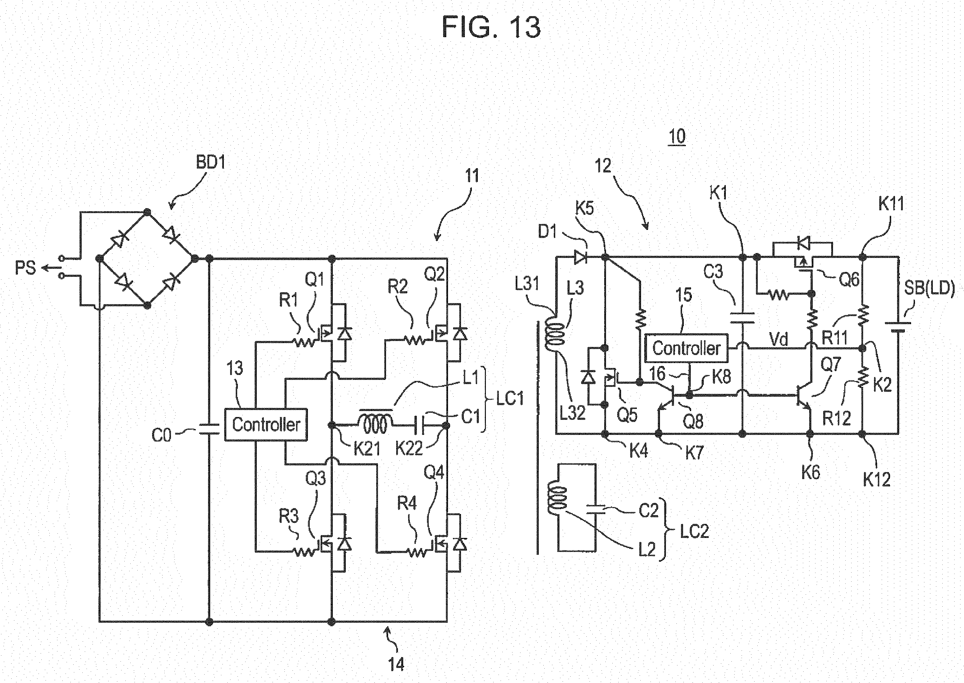

FIG. 13 schematically illustrates a circuit of non-contact power transmission system 10 according to a sixth exemplary embodiment. In the sixth exemplary embodiment, non-contact power transmission system 10 includes NPN bipolar type transistor Q8, for example, in place of the gate resistor of semiconductor switch Q5 in the fifth exemplary embodiment (see FIG. 12). Other configurations and operation in the sixth exemplary embodiment are similar to those in the fifth exemplary embodiment. Hereinafter, the sixth exemplary embodiment will be described by focusing on a difference from the fifth exemplary embodiment.

A gate (an example of the first control terminal) of semiconductor switch Q5 (an example of the first semiconductor switch) is connected to a collector of transistor Q8 (an example of the first transistor). A collector of transistor Q8 is connected to connection point K5 via a pull-up resistor. An emitter of transistor Q8 is connected to connection point K7 between connection point K4 and connection point K6.

A base (an example of the control terminal) of transistor Q8 is connected to connection point K8 between controller 15 (an example of the transistor controller) and a base (an example of the control terminal) of transistor Q7. That is, a signal output from output terminal 16 of controller 15 to connection point K8 is applied to both bases of transistors Q7, Q8. Transistors Q7, Q8 and controller 15 constitute an example of the control circuit.

When a high-level signal is output from output terminal 16 of controller 15 to connection point K8, transistor Q7 is turned on in a similar manner to that in the fourth exemplary embodiment (see FIG. 10). When transistor Q7 is turned on, semiconductor switch Q6 (an example of the second semiconductor switch) is turned on. When a high-level signal is output from controller 15 to connection point K8, transistor Q8 is turned on and semiconductor switch Q5 is turned off.

When a low-level signal is output from controller 15 to connection point K8, transistor Q7 is turned off and semiconductor switch Q6 is turned off, in a similar manner to that in the fourth exemplary embodiment (see FIG. 10). When a low-level signal is output from controller 15 to connection point K8, transistor Q8 is turned off and semiconductor switch Q5 is turned on.

As described above, in the circuit configuration in the sixth exemplary embodiment, controller 15 can share a control signal for turning on (or off) semiconductor switch Q5 and a control signal for turning off (or on) semiconductor switch Q6, with one signal. In this case, controller 15 may output to connection point K8 a signal which is the same as signal SG2 expressed in FIG. 11. Therefore, a control configuration of controller 15 can be simplified.

### SEVENTH EXEMPLARY EMBODIMENT

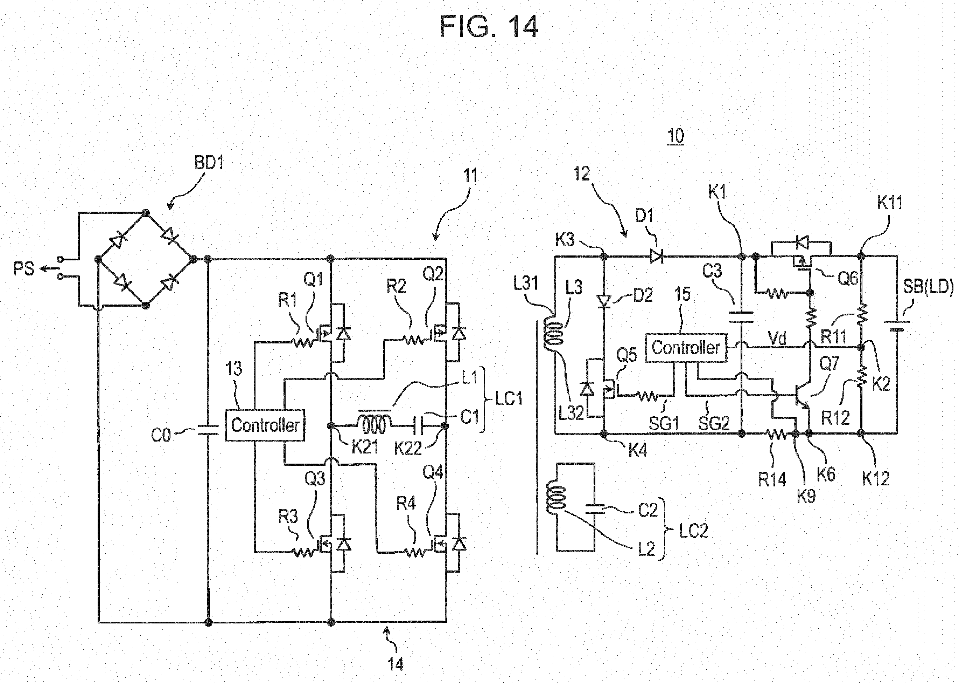

FIG. 14 schematically illustrates a circuit of non-contact power transmission system 10 according to a seventh exemplary embodiment. In the seventh exemplary embodiment, a current detection resistor for detecting a charging current to secondary battery SB is added to the fourth exemplary embodiment (see FIG. 10). Other configurations in the seventh exemplary embodiment are similar to those in the fourth exemplary embodiment. Hereinafter, the seventh exemplary embodiment will be described by focusing on a difference from the fourth exemplary embodiment.

In the seventh exemplary embodiment, current detection resistor R14 is connected between the negative electrode of secondary battery SB and other end L32 of power reception coil L3. Connection point K9 on the negative electrode side of secondary battery SB as one end of current detection resistor R14 is connected to controller 15.

Controller 15 detects the charging current to secondary battery SB, based on the voltage at connection point K9 during the charging of secondary battery SB. Controller 15 charges secondary battery SB by a constant-current and constant-voltage charging system. In the seventh exemplary embodiment, secondary battery SB may be a lithium ion battery suitably charged by the constant-current and constant-voltage charging system.

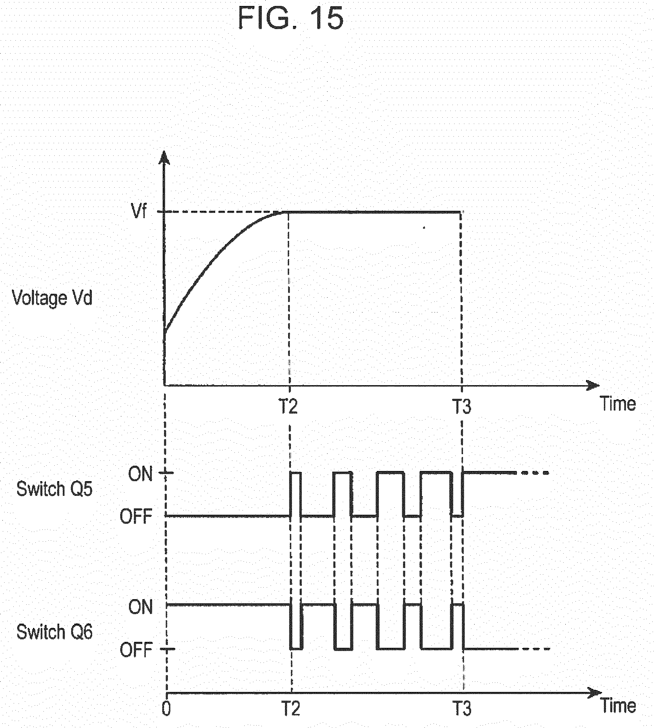

FIG. 15 is a timing chart schematically illustrating operation of non-contact power transmission system 10 according to the seventh exemplary embodiment. FIG. 15 schematically illustrates voltage Vd detected by controller 15 and on/off of semiconductor switches Q5, Q6.

Controller 15 detects voltage Vd divided by resistors R11, R12. As illustrated in FIG. 15, controller 15 keeps semiconductor switch Q5 steadily off by outputting low-level signal SG1 from a start of charging until voltage Vd reaches predetermined reference voltage Vf, and keeps semiconductor switch Q6 steadily on by outputting high-level signal SG2.

By this control, constant current charging is performed on secondary battery SB until voltage Vd reaches reference voltage Vf at time T2. A process from the start of charging to time T2 corresponds to an example of the charging step.

When voltage Vd reaches reference voltage Vf at time T2, controller 15 performs constant voltage charging on secondary battery SB so that voltage Vd is maintained at reference voltage Vf.

In order to perform constant voltage charging on secondary battery SB, controller 15 (an example of the PWM controller) outputs a PWM control signal as signals SG1, SG2 from time T2, and performs PWM control of semiconductor switches Q5, Q6. The PWM control signal output from controller 15 is set in advance at a predetermined frequency (for example, 20 Hz).

As illustrated in FIG. 15, controller 15 outputs the PWM control signal for controlling waveforms such that a waveform of a signal for controlling on/off of semiconductor switch Q5 is a waveform obtained by inverting a waveform of a signal for controlling on/off of semiconductor switch Q6. That is, during the off period of semiconductor switch Q5, semiconductor switch Q6 is maintained in the on state, and during the on period of semiconductor switch Q5, semiconductor switch Q6 is maintained in the off state.

Because controller 15 performs constant voltage charging on secondary battery SB, when the charging is progressed, the charging current gradually decreases. That is, when the charging is progressed, an on-duty ratio of semiconductor switch Q6 (an off-duty ratio of semiconductor switch Q5) gradually decreases.

Controller 15 detects a charging current to secondary battery SB, and when the detected charging current becomes less than a predetermined value, controller 15 determines that secondary battery SB is fully charged. As illustrated in FIG. 15, when controller 15 determines that secondary battery SB is fully charged at time T3, controller 15 outputs low-level signal SG2, keeps semiconductor switch Q6 steadily off, and stops the charging of secondary battery SB.

Controller 15 outputs high-level signal SG1, keeps semiconductor switch Q5 steadily on, and short-circuits power reception coil L3. By the short-circuiting of power reception coil L3, a current does not substantially flow in converging magnetic flux coil L2. A process from time T2 to time T3 corresponds to an example of the PWM control step, and a process at and after time T3 corresponds to an example of the charging completion step.

As described above, in the seventh exemplary embodiment, the constant current charging is switched to the constant voltage charging, at time T2 at which secondary battery SB is close to being fully charged. Therefore, in the seventh exemplary embodiment, secondary battery SB can be suitably charged by the constant-current and constant-voltage charging system.

In the seventh exemplary embodiment, when the PWM control is performed on semiconductor switch Q6, the PWM control is also performed on semiconductor switch Q5, and during the off period of semiconductor switch Q6, semiconductor switch Q5 is in the on period.

Accordingly, during a period when secondary battery SB is not being charged, a current does not substantially flow in converging magnetic flux coil L2. As a result, wasteful power consumption in power reception resonance circuit LC2 (converging magnetic flux coil L2 and capacitor C2) can be reduced, and power in charger 11 can also be reduced during a period when secondary battery SB is not charged.

The circuit configuration in the seventh exemplary embodiment is such that the current detection resistor is added to the circuit in the fourth exemplary embodiment (see FIG. 10). Alternatively, the current detection resistor may be added to the circuit in the fifth exemplary embodiment (see FIG. 12) or the sixth exemplary embodiment (see FIG. 13). In the case of adding the current detection resistor to the circuit in the sixth exemplary embodiment (see FIG. 13), controller 15 may output a signal which is the same as signal SG2 in FIG. 15.

Alternatively, the circuit configuration in the seventh exemplary embodiment may be such that the current detection resistor is added to the circuit in the first exemplary embodiment (see FIG. 1), the second exemplary embodiment (see FIG. 8), or the third exemplary embodiment (see FIG. 9). In these cases, controller 15 may perform PWM control of semiconductor switch SW1 in a similar manner applied to semiconductor switch Q5, and perform PWM control of switching element SW2 in a similar manner applied to semiconductor switch Q6.

### EIGHTH EXEMPLARY EMBODIMENT

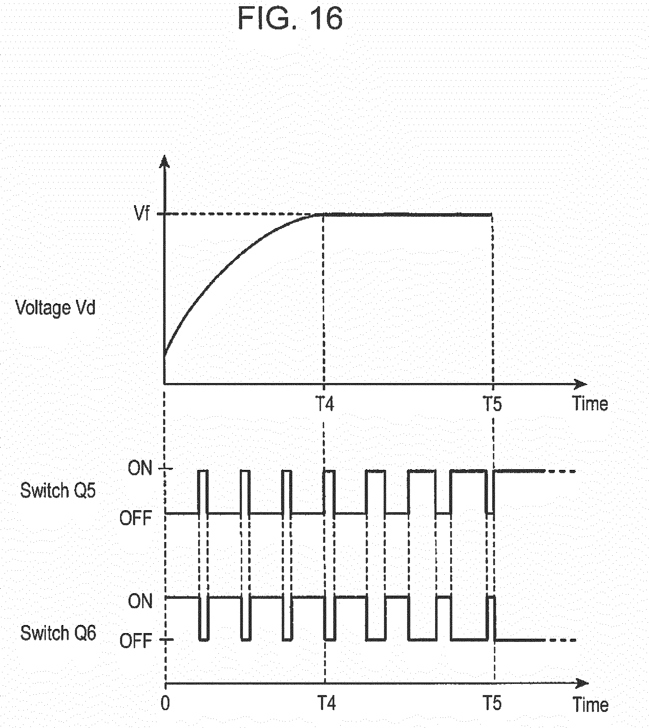

FIG. 16 is a timing chart schematically illustrating operation of non-contact power transmission system 10 according to an eighth exemplary embodiment. FIG. 16 schematically illustrates voltage Vd detected by controller 15 and on/off of semiconductor switches Q5, Q6.

A circuit configuration of non-contact power transmission system 10 in the eighth exemplary embodiment is the same as that in the seventh exemplary embodiment (see FIG. 14), for example. Hereinafter, the eighth exemplary embodiment will be described by focusing on a difference from the seventh exemplary embodiment.

After starting the charging of secondary battery SB, controller 15 detects a charging current to secondary battery SB, based on the voltage at connection point K9. In the case where the detected charging current is larger than a predetermined value, controller 15 outputs signals SG1, SG2 as PWM control signals from an operation start time, as illustrated in FIG. 16.

In a similar manner to that in the seventh exemplary embodiment, controller 15 outputs a PWM control signal for controlling waveforms such that a waveform of a signal for controlling on/off of semiconductor switch Q5 is a waveform obtained by inverting a waveform of a signal for controlling on/off of semiconductor switch Q6.

In FIG. 16, during a period from the operation start time to time T4 at which voltage Vd reaches reference voltage Vf, controller 15 keeps the on-duty ratio of semiconductor switch Q6 (the off-duty ratio of semiconductor switch Q5) at a constant value (for example, 80%). Accordingly, controller 15 performs constant current charging on secondary battery SB during the period from the operation start time to time T4.

At and after time T4, controller 15 performs constant voltage charging on secondary battery SB in a similar manner to that in the seventh exemplary embodiment. Accordingly, in a similar manner to that in the seventh exemplary embodiment, the on-duty ratio of semiconductor switch Q6 (the off-duty ratio of semiconductor switch Q5) gradually decreases.

The operation at and after time T4 is carried out in a similar manner to that in the seventh exemplary embodiment. That is, when the charging current becomes less than a predetermined value, controller 15 determines that secondary battery SB is fully charged. As illustrated in FIG. 16, when controller 15 determines that secondary battery SB is fully charged at time T5, controller 15 outputs low-level signal SG2, keeps semiconductor switch Q6 steadily off, and stops the charging of secondary battery SB. Controller 15 outputs high-level signal SG1, keeps semiconductor switch Q5 steadily on, and short-circuits power reception coil L3. By the short-circuiting of power reception coil L3, a current does not substantially flow in converging magnetic flux coil L2.

There is considered a case where power transmission from charger 11 to electric device 12 becomes excessively large due to charger 11 and electric device 12 disposed in a smaller distance than that in a design specification, for example. In this case, the charging current to secondary battery SB becomes larger than a predetermined value. However, according to the eighth exemplary embodiment, when the charging current to secondary battery SB becomes larger than the predetermined value, PWM control is performed on semiconductor switches Q5, Q6. Accordingly, charging control of secondary battery SB can be suitably carried out.

There is also considered the case where the charging current becomes larger than the predetermined value due to a metal foreign substance sandwiched between charger 11 and electric device 12. According to the eighth exemplary embodiment, heat generation in the metal foreign substance can be reduced, by performing PWM control on semiconductor switches Q5, Q6.

### OTHERS

(1) In the first to third exemplary embodiments, switching element SW1 is connected between both ends of power reception coil L3. In the fourth to sixth exemplary embodiments, semiconductor switch Q5 is connected between both ends of power reception coil L3. Alternatively, switching element SW1 or semiconductor switch Q5 may be connected between both ends of converging magnetic flux coil L2. However, because the impedance of power reception resonance circuit LC2 increases, the first to sixth exemplary embodiments are preferable.
(2) In the above exemplary embodiments, load LD is a secondary battery. Alternatively, load LD may be a load that operates by power supplied from power reception coil L3.
(3) In the fourth to sixth exemplary embodiments, a MOSFET is used for semiconductor switch Q5. Alternatively, a bipolar transistor may be used for semiconductor switch Q5. In this case, because the bipolar transistor does not incorporate a body diode, diode D2 in the fourth exemplary embodiment (see FIG. 10) becomes unnecessary.
(4) In the above exemplary embodiments, a full-bridge circuit including four switching elements Q1 to Q4 constitutes the drive circuit of power transmission resonance circuit LC1 of charger 11. However, alternatively, a half-bridge circuit including two switching elements may constitute the drive circuit.
(5) In the above exemplary embodiments, an electric toothbrush is exemplified as electric device 12. However, the above exemplary embodiments can be applied to other cosmetic treatment small electric appliances such as an electric shaver and an electric epilator, for example.

### INDUSTRIAL APPLICABILITY

As described above, the present disclosure can be applied to various non-contact power feeders, non-contact power reception devices, and non-contact power transmission systems.

### REFERENCE MARKS IN THE DRAWINGS

- 10:: non-contact power transmission system
- 11:: charger
- 12:: electric device
- 13, 15:: controller
- 14:: oscillation circuit
- D1, D2:: diode
- L1:: power transmission coil
- L2:: converging magnetic flux coil
- L3:: power reception coil
- LC1:: power transmission resonance circuit
- LC2:: power reception resonance circuit
- LD:: load
- Q5, Q6:: semiconductor switch
- SW1, SW2:: switching element

## Claims

1. A power reception device comprising:
a power reception resonance circuit including a converging magnetic flux coil for collecting magnetic fluxes of an alternating field generated in a power transmission resonance circuit including a power transmission coil for transmitting power in a non-contact manner;
a power reception coil magnetically coupled to the converging magnetic flux coil without being electrically connected to the power reception resonance circuit;
a load electrically connected to the power reception coil; and
a current limiter configured to prevent a current from substantially flowing in the converging magnetic flux coil.

2. The power reception device according to claim 1, further comprising:
a power supply switch provided between the power reception coil and the load; and
a current controller that controls the current limiter,
wherein the load is a secondary battery to be charged by supply of direct-current power obtained through rectification of alternating-current power generated in the power reception coil, and
the current controller controls the current limiter, and prevents a current from substantially flowing in the converging magnetic flux coil while the power supply switch is maintained in an off state.

3. The power reception device according to claim 2, further comprising a switch controller that controls the power supply switch, wherein
the switch controller determines whether the secondary battery is fully charged, and turns off the power supply switch when the switch controller determines that the secondary battery is fully charged.

4. The power reception device according to claim 2, further comprising a pulse-width-modulation (PWM) controller that performs PWM control of the power supply switch,
wherein the current controller controls the current limiter, and prevents a current from substantially flowing in the converging magnetic flux coil during an off period of the power supply switch by the PWM control.

5. The power reception device according to claim 2, wherein
the current limiter includes a switching element which is electrically connected to the power reception coil and is not electrically connected to the power reception resonance circuit, and the switching element prevents a current from substantially flowing in the power reception coil.

6. The power reception device according to claim 5, wherein
the switching element is an N-channel metal-oxide semiconductor field-effect transistor (MOSFET),
the current limiter further includes a diode connected in series to the MOSFET,
an anode of the diode is connected to a first end of the power reception coil,
a cathode of the diode is connected to a drain of the MOSFET, and
a source of the MOSFET is connected to a second end of the power reception coil.

7. The power reception device according to claim 5, further comprising a rectification circuit that rectifies alternating-current power generated in the power reception coil,
wherein the switching element is an N-channel MOSFET having a source connected to a ground side of the rectification circuit and having a drain connected to a positive voltage side of the rectification circuit.

8. The power reception device according to claim 5, further comprising a control circuit that controls the power supply switch and the switching element,
wherein the switching element is a first semiconductor switch having a first control terminal for controlling the switching element,
the power supply switch is a second semiconductor switch having a second control terminal for controlling the power supply switch,
the control circuit includes:
a first transistor connected between the first control terminal and a ground, and configured to turn off the first semiconductor switch when the first transistor is turned on;
a second transistor connected between the second control terminal and the ground and configured to turn on the second semiconductor switch when the second transistor is turned on; and
a transistor controller including an output terminal connected between a control terminal of the first transistor and a control terminal of the second transistor, the transistor controller outputting from the output terminal an on signal for turning on the first transistor and the second transistor or an off signal for turning off the first transistor and the second transistor.

9. A non-contact power transmission system comprising:
the power reception device according to claim 1; and
a power transmission device including the power transmission resonance circuit, and a drive circuit that supplies alternating-current power to the power transmission resonance circuit.

10. A charging method for a non-contact charge system including
a power transmission device including a power transmission resonance circuit having a power transmission coil for transmitting power; and
a power reception device including a power reception resonance circuit, a power reception coil, a secondary battery, a power supply switch, and a switching element,
the power reception resonance circuit having a converging magnetic flux coil for collecting magnetic fluxes of an alternating field generated in the power transmission resonance circuit,
the power reception coil being magnetically coupled to the converging magnetic flux coil,
the secondary battery being electrically connected to the power reception coil,
the power supply switch being provided between the power reception coil and the secondary battery,
the switching element for preventing a current from substantially flowing in the converging magnetic flux coil when the switching element is turned on,
the charging method comprising:
a charging step of starting charging of the secondary battery by turning off the switching element and turning on the power supply switch;
a PWM control step of performing PWM control of the switching element and the power supply switch, from a predetermined time point at which the secondary battery is close to being fully charged; and
a charging completion step of turning on the switching element and turning off the power supply switch when the secondary battery is fully charged,
wherein, in the PWM control step, the switching element is maintained in an off state during an on period of the power supply switch, and the switching element is maintained in an on state during an off period of the power supply switch.
